# EUROPEAN PATENT APPLICATION

(11) **EP 4 744 943 A1**
(43) Date of publication of application: **20.05.2026**
(21) Application number: 24213372.6
(22) Date of filing: 15.11.2024
(51) Int. Cl.: B60L 50/64, H01M 50/249, H01M 50/262, H01M 50/204, H01M 50/24

(54) **BATTERY SYSTEM WITH NUT PROVIDING DUAL-SEALING**

(71) Applicant: Samsung SDI Co., Ltd., Yongin-si, Gyeonggi-do 17084 (KR)
(72) Inventor: Bauer, Manuel, 8434 Tillmitsch (AT)
(74) Representative: Gulde & Partner

(57) **Abstract**

The present disclosure refers to a battery system (100), including a battery housing (10) including a frame (14) and a cover plate (16) disposed on the frame (14) and having an accommodation chamber (11) defined by the frame (14) and the cover plater (16) and a plurality of battery cells (12) accommodated within the accommodation chamber (11), wherein a tunnel (20) extends through the frame (14) from a first end of the accommodation chamber (11) to a second end of the accommodation chamber (11), wherein the tunnel (20) is adapted to receive a fastening element extending through the tunnel (20), wherein the frame (14) includes, at an end of the tunnel (20), a sleeve (30) extending through an opening (18) in the cover plate (16) to an outer side of the cover plate (16), the sleeve (30) including an external thread (34), wherein the cover plate (16) abuts a shoulder (32) of the sleeve (30); a nut having (40) an internal thread (42) and screwed onto the external thread (34) of the sleeve (30) such that an axial end face (44) of the nut (40) abuts the outer side of the cover plate (16), wherein the nut (40) includes a thread seal (43) at the internal thread (42) sealing the nut (40) to the sleeve (30) and an axial seal (46) at the axial end face (44) of the nut (40), the axial seal (46) encircling the sleeve (30) and sealing the nut (40) to the outer side of the cover plate (16).

## Description

### Field of the Disclosure

Embodiments of the present disclosure relate to a battery system and an electric vehicle including such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

Large battery systems face structural problems due to their length and width. A particular problem in the development of such battery systems is to ensure sufficient stability in a battery pack. Therefore, additional fastening means such as screw mounts in the middle of the battery pack and extending through the battery pack may need to be provided. Such additional fastening means, however, may lead to a new problem, namely introducing potential places where water or other contaminants might enter the battery pack from the outside and cause safety issues. In other words, there might be a tightness or sealing problem.

It is therefore an object of the invention to overcome these problems, for example to provide a battery system that provides sufficient stability of the battery system while protecting the battery cells inside the battery system from water or other contaminants.

### Summary of Invention

The invention is defined by the appended claims and their equivalents. The description that follows is subjected to this limitation. Any disclosure lying outside the scope of said claims and their equivalents is only intended for illustrative as well as comparative purposes.

According to one embodiment of the present disclosure, a battery system is provided which includes a battery housing including a frame and a cover plate disposed on or below the frame and having an accommodation chamber defined by the frame and the cover plate; a plurality of battery cells accommodated within the accommodation chamber; wherein a tunnel extends through the frame from a first end of the accommodation chamber to a second end of the accommodation chamber, wherein the tunnel is adapted to receive a fastening element extending through the tunnel, wherein the frame includes, at an end of the tunnel, a sleeve extending through an opening in the cover plate to an outer side of the cover plate, the sleeve including an external thread, wherein the cover plate abuts a shoulder of the sleeve; a nut having an internal thread and screwed onto the external thread of the sleeve such that an axial end face of the nut abuts the outer side of the cover plate, wherein the nut includes a thread seal at the internal thread sealing the nut to the sleeve and an axial seal at the axial end face of the nut, the axial seal encircling the sleeve and sealing the nut to the outer side of the cover plate.

The thread seal may include a sealing coating.

The internal thread of the nut may be a fine thread.

The axial seal may include a sprayed-on gasket.

The axial seal may include a thermoplastic elastomer, TPE.

The axial seal may include a rubber sealing which is vulcanized into a groove of the nut.

The axial seal may be arranged at a radial distance from the internal thread of the nut such that it does not extend into a gap between the cover plate and the sleeve.

The nut may further include an upper seal for sealing an upper end of the nut to the sleeve.

The upper seal may include an inner circular lip abutting an outer surface of the sleeve.

The cover plate may be any one of: a top cover plate, a bottom cover plate.

Yet another embodiment of the present disclosure refers to an electric vehicle including the battery system according to an embodiment of the disclosure.

The electric vehicle may include a carrying structure and a fastening element extending through the tunnel of the frame of the battery system so as to fasten the battery system to the carrying structure.

Further embodiments of the present disclosure could be learned from the dependent claims or the following description.

### Brief Description of the Drawings

Features will become apparent to those of ordinary skill in the art by describing in detail exemplary embodiments with reference to the attached schematic drawings in which:
FIG. 1 illustrates a perspective view of a battery system according to an embodiment of the present disclosure.
FIG. 2 illustrates an enlarged view of II shown in FIG. 1.
FIG. 3 illustrates a sectional view of a part of the battery system shown in FIG. 1.
FIG. 4 illustrates a high-angle perspective view of a nut of the battery system shown in FIG. 1.
FIG. 5a illustrates a low-angle perspective view of the nut of the battery system shown in FIG. 1.

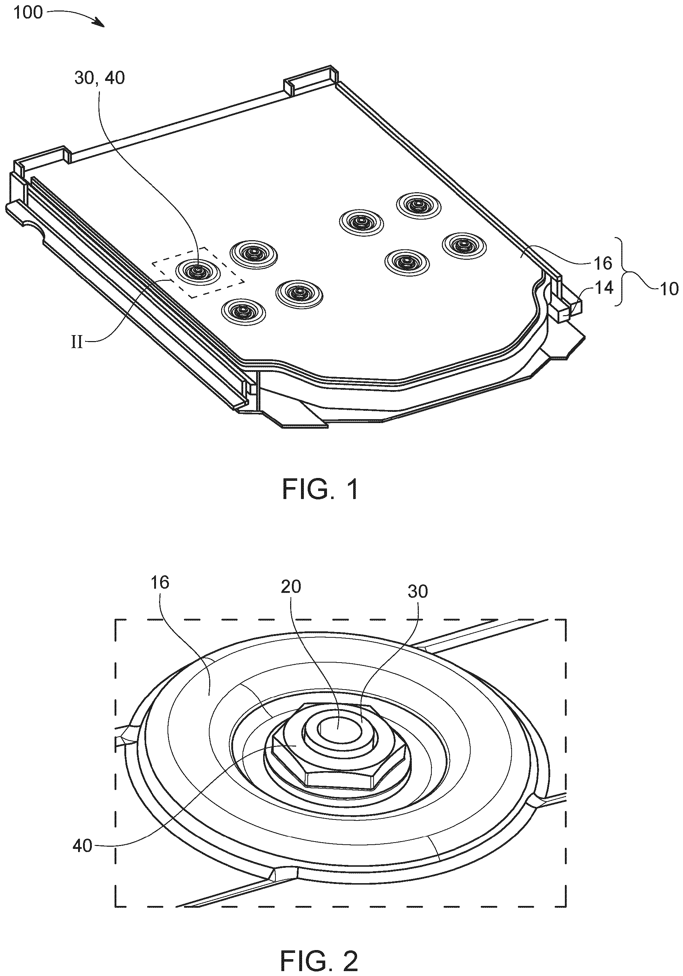

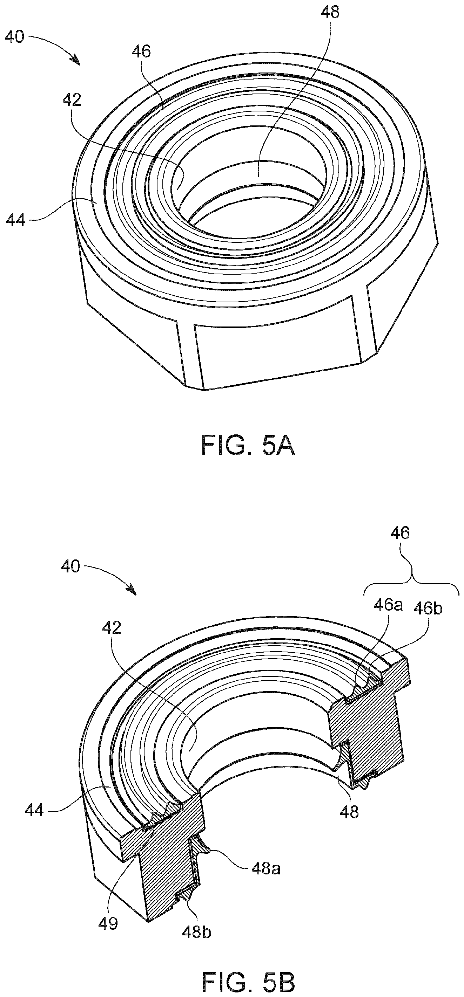

FIG. 5a illustrates a sectional view of the nut of the battery system shown in FIG. 1.

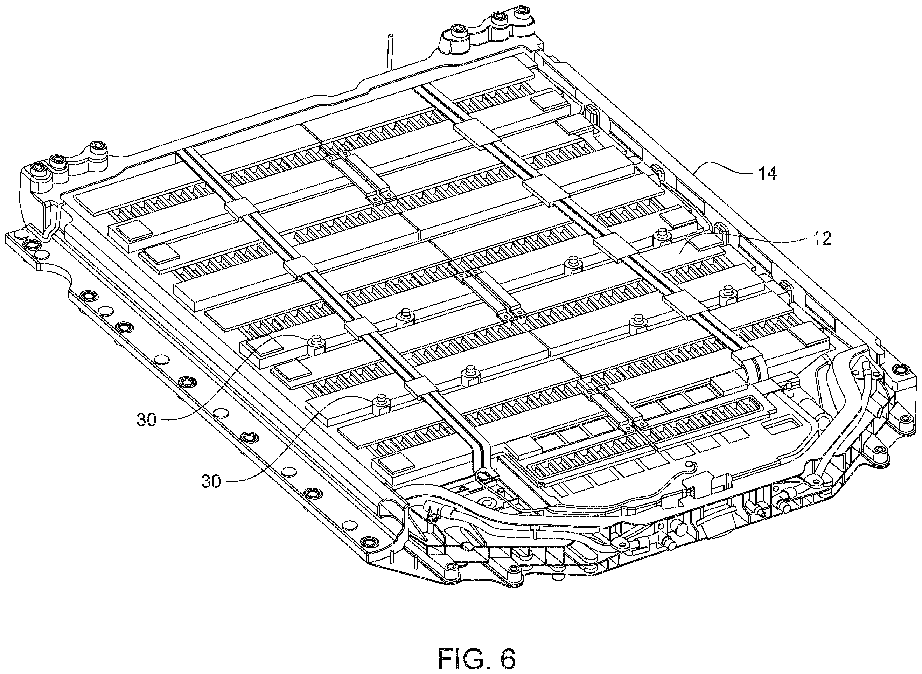

FIG. 6 illustrates a perspective view of the battery system shown in FIG. 1 without cover plate.

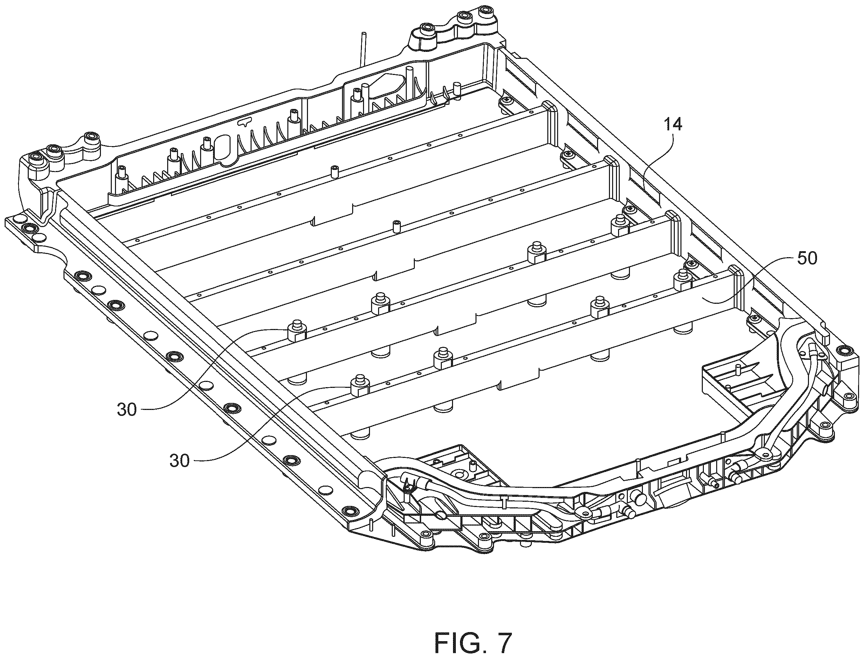

FIG. 7 illustrates a perspective view of the battery system shown in FIG. 6 without battery cells.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to an embodiment of the present disclosure, a battery system is provided. The battery system includes a battery housing including a frame and at least one cover plate. The cover plate may be a top cover plate and/or a bottom cover plate. That is, two cover plates may be provided, one top cover plate and one bottom cover plate. The cover plate may be disposed on or below the frame. Inside the battery housing, and thus inside an inner space defined by the frame and the cover plate(s), an accommodation chamber is defined which accommodates a plurality of battery cells. Thus, the battery system includes a plurality of battery cells, for example prismatic, pouch type or cylindrical battery cells. The battery cells may be arranged to form one or more battery packs.

The frame of the battery system forms part of a carrier framework of the battery system. The cover plate may also form part of this carrier framework. As explained above, the carrier framework carries or supports the battery cells. It provides the structural connection to the carrying structure of the vehicle in which the battery system may be mounted/installed. In other words, the frame may be an integral structure of the battery housing which provides structural rigidity to the battery housing, wherein the frame may include beams extending in a horizontal and/or vertical plane and rigidly joined support means to support the cover plate of the battery housing.

A tunnel, or passage, extends through the frame and through the accommodation chamber which is disposed inside the frame. The tunnel extends from a first, e.g. lower, end of the accommodation chamber to a second, e.g. upper, end of the accommodation chamber. In other words, the tunnel has a first opening at a first end surface of the frame, extends from the first opening through the frame up to a second opening at a second end surface of the frame. The tunnel has a circumferential wall that delimits the tunnel from the accommodation chamber. The tunnel thereby provides a sealed passage. In other words, the frame includes a (vertical) beam extending through the accommodation chamber and connecting a first side of the frame with a second side of the frame, wherein inside the beam the tunnel is formed. The tunnel is adapted to receive a fastening element to fasten the battery system to a carrying structure of a vehicle. That is, the tunnel is formed such that it may accommodate a fastening element, for example a screw or bolt, extending through the tunnel. For example, a cross-section or diameter of the tunnel may correspond to a cross-section or diameter of the fastening element. The fastening element may fasten the frame, and thus the battery system, to a carrying structure of the vehicle.

The frame further includes, at an end of the tunnel, a sleeve extending at least in part through an opening in the cover plate to an outer side of the cover plate. The tunnel extends through the sleeve as well. In other words, the beam of the frame through which the tunnel is formed may extend above the cover plate, wherein the section of the beam abutting the cover plate and extending through and above the cover plate is herein denoted as the sleeve. That is, the cover plate abuts a shoulder of the sleeve. In other words, the sleeve has a shoulder on which it is contacted by the cover plate. If the cover plate is a top cover plate, the cover plate may rest upon the shoulder of the sleeve. The shoulder is thus disposed at an inner side of the cover plate, or at a first side of the opening of the cover plate, while the sleeve extends through the opening of the cover plate to the outer side of the cover plate, or to a second side of the opening of the cover plate. The sleeve may be formed as a recess in the beam of the frame or, in other words, the shoulder as a protrusion in the sleeve. The sleeve includes an external thread. That is, the outer surface of the sleeve has a thread formed therein.

The battery system further includes a nut having an internal thread. That is, the inner surface of the nut has a thread formed therein. The nut includes a thread seal and an axial seal. The thread seal is provided at the internal thread, may cover the internal thread of the nut, for example in the form of a coating. The axial seal is "axial" in the sense that it is disposed at the axial end face of the nut, specifically at the axial end face abutting the cover plate. The axial seal encircles or surrounds an outer surface of the sleeve in an assembled state of the battery system. In other words, the axial seal encircles or surrounds a through-hole extending through the nut and including the internal thread. The axial seal may include two circular sealing lips which, in the mounted position of the nut, abut the outer surface of the cover plate. In an assembled state, the nut is screwed onto the sleeve wherein the internal thread of the nut and the external thread of the sleeve interact. The nut is screwed onto the sleeve such that an axial end face of the nut, i.e. the end face including the axial seal, abuts the outer side of the cover plate. The nut may be screwed onto the sleeve such that the nut presses the cover plate onto the shoulder of the sleeve thereby fastening or clamping the cover plate to the frame. Thereby, the axial seal encircling the sleeve seals the nut to the outer side of the cover plate. Further, the thread seal seals the nut to the sleeve.

The thread seal prevents that water or other contaminants can come between, or seep in-between, the outer surface of the sleeve and the inner surface of the nut thereby preventing that water or other contaminants can enter the battery housing and the accommodation chamber via this way. The axial seal prevents that water or other contaminants can come between, or can seep in-between, the axial end face of the nut and the outer side of the cover plate thereby preventing that water or other contaminants can enter the battery housing and the accommodation chamber via this way. Thus, the battery system according to the invention includes a nut which provides a dual-sealing: A first sealing via the thread seal which prevents that water or other contaminants can enter the accommodation chamber via the threads and a second sealing via the axial seal that prevents that water or other contaminants can enter the accommodation chamber via the cover plate. Thus, the battery system may be fastened to the carrying structure of a vehicle via a fastening element extending through the tunnel while providing protection for the battery cells. That is, the battery system according to the invention, via the nut and the sleeve, fixes the problem that water or other external or environmental influences might enter the battery pack and cause safety issues. Thus, the battery system according to the invention allows for sufficient stability of the battery system, due to the tunnel adapted to receive the fastening element, while protecting the battery cells inside the battery system from external or environmental influences via the nut and sleeve with their dual-sealing.

According to an embodiment, the thread seal includes a sealing coating. In other words, the thread seal may be applied to the internal thread of the nut via coating. The coating may be on a polyamide basis. Such a pre-coated thread may provide for a simple and efficient sealing.

According to an embodiment, the internal thread of the nut is a fine thread. A fine thread means a thread with a smaller pitch than a regular thread. The thread pitches may be defined based on a suitable standard or norm, for example an ISO standard such as ISO 261 defining metric threads. For example, M10-1.50 may denote a regular thread while M10-1.25 may denote a fine thread, wherein 1.5 and 1.25 denote the pitch. The nut having a fine thread allows for the nut to be designed sufficiently flat such as to fulfill installation space requirements. That is, the nut having a fine thread requires less installation space. Due to the thread seal a sufficient sealing may be achieved also with a fine thread.

According to an embodiment, the axial seal includes a sprayed-on gasket. In other words, the axial seal may be formed via spray-on or may be sprayed-on. Spraying on the axial seal may be a simple way of providing the axial seal.

According to an embodiment, the axial seal includes a thermoplastic elastomer, TPE. This may provide for a simple and efficient sealing.

According to an embodiment, the axial seal includes a rubber sealing which is vulcanized into a groove of the nut. That is, the nut may include a groove formed in the axial end face, wherein the axial seal is disposed inside and extending out from the groove. In other words, the axial seal may be a vulcanized seal or a gasket made of vulcanized rubber. For example, the polymers subjected to vulcanization may be polyisoprene (natural rubber) and/or styrene-butadiene rubber (SBR). Providing the axial seal as such a rubber seal may provide for a simple and efficient sealing.

According to an embodiment, the axial seal is arranged at a radial distance from the internal thread of the nut such that it does not extend into a gap between the cover plate and the sleeve. Thus, in the assembled state, the axial seal is arranged at a radial distance from the sleeve. The gap means that the cover plate while abutting the shoulder of the sleeve may not extend unto an outer surface of the sleeve portion extending through the opening of the cover plate. In other words, the gap may be formed between the outer surface of the sleeve portion extending through the opening of the cover plate and the inner surface of the opening of the cover plate. Again, in other words, the opening in the cover plate may have a larger diameter or cross-section than the diameter or cross-section of the sleeve portion extending through the opening of the cover plate, wherein the gap may denote the difference in diameter or cross-section. The gap between the cover plate and the sleeve may be present because of production tolerances of the cover plate and the frame. When the axial seal is arranged at a radial distance from the internal thread of the nut such that it does not extend into a gap between the cover plate and the sleeve, it may be ensured that the axial seal does not extend into the gap but is rather placed radially outward from the gap. That is, the axial sealing may be disposed farther radially outward than the gap in order to reach a continuous sealing surface on the cover plate. For example, the axial seal may be distanced so far from the internal thread of the nut that an inner end or circumference of the axial seal is disposed radially outward from the gap. This may ensure sufficient contact of the axial seal with the outer side of the cover plate and may thus provide for a reliable sealing.

Thus, in an embodiment, the nut may include an axial seal at the axial end face, the axial seal encircling the sleeve and sealing the nut to the outer side of the cover plate. The axial seal may, for example, be formed as a sprayed-on gasket or a rubber sealing which is vulcanized into a groove at the axial end face of the nut.

According to an embodiment, the nut further includes an upper seal for sealing an upper end of the nut to the sleeve. The upper seal may include an inner circular lip abutting an outer surface of the sleeve. This may further improve the sealing between the nut and the sleeve.

According to an embodiment, the cover plate is any one of: a top cover plate, a bottom cover plate. As mentioned above, the cover plate may be either a top cover plate or a bottom cover plate. Also, the battery housing may include both a top cover plate and a bottom cover plate. The embodiments disclosed herein may apply to both the top cover plate and the bottom cover plate if both are present.

The disclosure also pertains to an electric vehicle including a battery system according to the disclosure, i.e. a battery system as explained above.

According to an embodiment, the electric vehicle includes a carrying structure and a fastening element, wherein the fastening element extends through the tunnel of the frame of the battery system so as to fasten the battery system to the carrying structure. The fastening element thereby also extends through the through-hole of the sleeve. The battery system may thus be securely fastened to the carrying structure while maintaining a secure seal protecting the battery cells from water or other contaminants.

### Specific Embodiments

FIGS. 1 to 3 illustrate a battery system 100 according to the present disclosure. The battery system 100, which is shaped so as to fit into an underbody of an electric vehicle, includes a battery housing 10 enclosing an accommodation chamber 11 inside of which a plurality of battery cells 12 are arranged. The battery housing 10 includes a frame 14 and a cover plate 16 disposed on or below the frame 14. The cover plate 16 may be a top cover plate or a bottom cover plate. The frame 14 forms part of a carrier framework of the battery system 100 via which the battery system 100 may be fastened to a carrying structure of an electric vehicle (not shown).

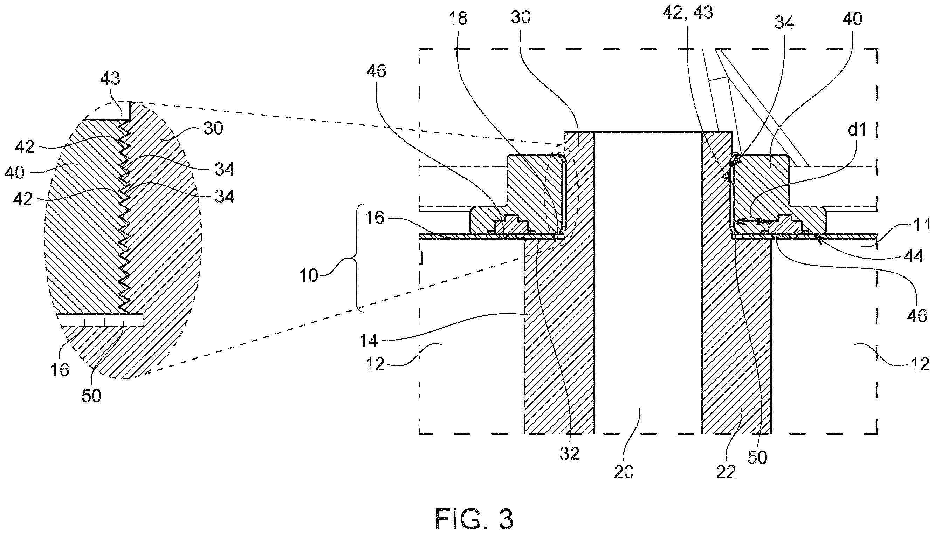

The frame 14 includes a tunnel 20 extending through the frame 14 from an upper end of the battery system 100 to a not-shown lower end of the battery system 100, see FIG. 3 which shows part of the battery system 100 in a cross-section. The part of the frame 14 including the tunnel 20 may be a (cross)beam 50 which may separate neighboring battery cells 12. The tunnel 20 extends completely through the battery system 100 and thus also through the accommodation chamber 11, i.e. from a first end to a second end of the accommodation chamber 11. The tunnel 20 is delimited from the accommodation chamber 11 via a circumferential wall 22 of the frame 14. The tunnel 20 is adapted to receive a fastening element (not shown) which may extend through the tunnel 20 to fasten the battery system 100 to the carrying structure of the electric vehicle.

FIG. 6 shows the battery system 100 of FIG. 1 but with the cover plate 16 removed so that the view onto the underlying battery packs or battery cells 12 is unobstructed. In FIG. 7 the battery packs or battery cells 12 are removed as well so that only the frame 14 remains. As can be seen in FIG. 6 and 7, each of the sleeves 30 are arranged at ends of crossbeams 50.

The frame 14 includes, at an end of the tunnel 20, a sleeve 30 extending through an opening 18 in the cover plate 16 to an outer side of the cover plate 16. The sleeve 30 includes a shoulder 32 which the cover plate 16 abuts and, at the portion of the sleeve 30 extending above the opening 18, an external thread 34. In other words, a portion of the beam that includes the tunnel 20 extends through the opening 18 and above the cover plate 16, wherein at an outer surface of that portion of the beam, i.e. the sleeve 30, the external thread 34 is formed.

The battery system 100 further includes a nut 40 having an internal fine thread 42, wherein the nut 40 is screwed onto the external thread 34 of the sleeve 30. The nut 40 is screwed onto the sleeve 30 such that an axial end face 44 of the nut 40 abuts an outer side of the cover plate 16, see FIGS. 2 and 3. The cover plate 16 is thus clamped between the shoulder 32 of the sleeve 30 and the axial end face 44 of the nut 40. The internal thread 42 of the nut 40 includes a coated sealing forming a thread seal 43 and sealing the nut 40 to the sleeve 30. Further, the nut 40 includes an axial seal 46 at the axial end face 44, the axial seal 46 encircling the sleeve 30 and sealing the nut 40 to the outer side of the cover plate 16. The axial seal 46 may, for example, be formed as a sprayed-on gasket or a rubber sealing which is vulcanized into a groove at the axial end face 44 of the nut 40.

The nut 40 of the battery system 100 provides a dual-sealing: A first sealing via the thread seal 43 which prevents that water or other contaminants can enter the accommodation chamber 11 via the threads 34, 42 and a second sealing via the axial seal 46 that prevents that water or other contaminants can enter the accommodation chamber 11 via a passage between the cover plate 16 and the axial end face 44 of the nut 40. Thus, the battery system 100 may be fastened to the carrying structure of a vehicle via a fastening element extending through the tunnel 20 while providing protection for the battery cells 12. That is, the battery system 100 according to the invention, via the nut 40 and the sleeve 30, fixes the problem that water or other external or environmental influences might enter the battery system 100 and cause safety issues.

The axial seal 46 is arranged at a radial distance di from the internal thread 43 of the nut 40 such that it does not extend into a gap 50 between the cover plate 16 and the sleeve 30. The gap 50 may be a circumferential gap formed because the opening 18 in the cover plate 16 may have a larger diameter than the diameter of the sleeve 30 extending through the opening 18 of the cover plate 16. The gap 50 may be present because of production tolerances of the cover plate 16 and the frame 14. The axial sealing 46 is disposed farther radially outward than the gap 50, specifically the radial distance di is chosen so large that an inner end or circumference of the axial seal 46 is disposed radially outward from the gap 50. This may ensure sufficient contact of the axial seal 46 with the outer side of the cover plate 16 and may thus provide for a reliable sealing.

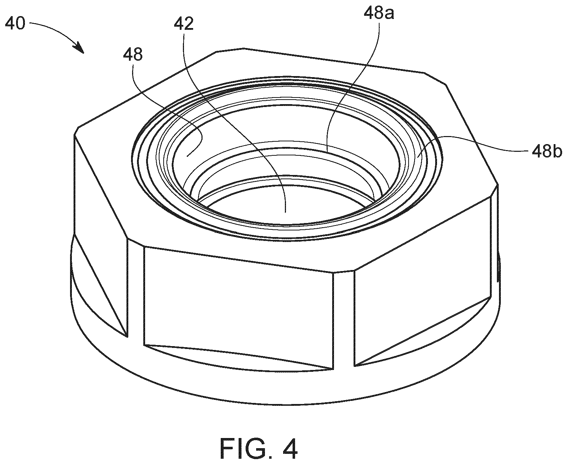

FIG. 4 and 5 show an embodiment of the nut 40. In FIG. 4, the nut 40 is shown in a perspective view from above wherein the internal thread 42 can be seen which interacts with the external thread 43 of the sleeve 30 (see FIG. 3) to provide the above-explained sealing. Further, the nut 40 in this embodiment optionally includes an upper sealing 48 with an inner circular lip 48a and a top circular lip 48b. The inner circular lip 48a abuts to an outer surface of the sleeve 30 when the sleeve 30 extends through the opening in the nut 40 and thereby provides for a further sealing. The top circular lip 48b may provide a sealing to a (not shown) component arranged above the nut 40.

In FIG. 5a and 5b the nut 40 is shown in a perspective view from below and a sectional view, respectively. In these FIGS, the axial seal 46 can be seen in more detail. The axial seal 46, as mentioned above, may be formed as a sprayed-on gasket or a rubber sealing which is vulcanized into a groove 49 at the axial end face 44 of the nut 40. The axial seal 46 may include two circular sealing lips 46a, 46b which, in the mounted position of the nut 40, abut the outer surface of the cover plate 16.

### Reference signs

- 10: battery housing
- 11: accommodation chamber
- 12: battery cells
- 14: frame
- 16: cover plate
- 18: opening in cover plate
- 20: tunnel
- 22: circumferential wall of tunnel
- 30: sleeve
- 32: shoulder of sleeve
- 34: external thread
- 40: nut
- 42: internal thread
- 43: thread sealing
- 44: axial end face
- 46: axial sealing
- 46a: circular sealing lip
- 46b: circular sealing lip
- 48: upper sealing
- 48a: inner circular lip
- 48b: top circular lip
- 49: groove
- 50: crossbeams
- 100: battery system

## Claims

1. A battery system (100), comprising:
a battery housing (10) comprising a frame (14) and a cover plate (16) disposed on the frame (14) and having an accommodation chamber (11) defined by the frame (14) and the cover plate (16);
a plurality of battery cells (12) accommodated within the accommodation chamber (11);
wherein a tunnel (20) extends through the frame (14) from a first end of the accommodation chamber (11) to a second end of the accommodation chamber (11) such that a circumferential wall (22) of the tunnel (20) delimits the tunnel (20) from the accommodation chamber (11), wherein the tunnel (20) is adapted to receive a fastening element extending through the tunnel (20) to fasten the battery system (100) to a carrying structure of a vehicle;
wherein the frame (14) comprises, at an end of the tunnel (20), a sleeve (30) extending through an opening (18) in the cover plate (16) to an outer side of the cover plate (16), the sleeve (30) comprising an external thread (34), wherein the cover plate (16) abuts a shoulder (32) of the sleeve (30);
a nut (40) having an internal thread (42) and screwed onto the external thread (34) of the sleeve (30) such that an axial end face (44) of the nut (40) abuts the outer side of the cover plate (16), wherein the nut (40) comprises a thread seal (43) at the internal thread (42) sealing the nut (40) to the sleeve (30) and an axial seal (46) at the axial end face (44) of the nut (40), the axial seal (46) encircling the sleeve (30) and sealing the nut (40) to the outer side of the cover plate (16).

2. The battery system (100) as claimed in claim 1, wherein the thread seal (43) comprises a sealing coating.

3. The battery system (100) as claimed in claim 1 or 2, wherein the internal thread (42) of the nut (40) is a fine thread.

4. The battery system (100) as claimed in any one of the preceding claims, wherein the axial seal (46) comprises a sprayed-on gasket.

5. The battery system (100) as claimed in any one of the preceding claims, wherein the axial seal (46) comprises a thermoplastic elastomer, TPE.

6. The battery system (100) as claimed in any one of the preceding claims, wherein the axial seal (46) comprises a rubber sealing which is vulcanized into a groove of the nut (40).

7. The battery system (100) as claimed in any one of the preceding claims, wherein the axial seal (46) is arranged at a radial distance (d₁) from the internal thread (42) of the nut (40).

8. The battery system (100) as claimed in any one of the preceding claims, wherein the nut (40) further comprises an upper seal (48) for sealing an upper end of the nut (40) to the sleeve (30).

9. The battery system (100) as claimed in claim 8, wherein the upper seal (48) comprises an inner circular lip (48a) abutting an outer surface of the sleeve (30).

10. The battery system (100) as claimed in any one of the preceding claims, wherein the cover plate (16) is any one of: a top cover plate, a bottom cover plate.

11. An electric vehicle comprising the battery system (100) as claimed in any one of the preceding claims.

12. The electric vehicle as claimed in claim 11, comprising a carrying structure and a fastening element extending through the tunnel (20) of the frame (14) of the battery system (100) so as to fasten the battery system (100) to the carrying structure.

## Amended claims

### Amended claims in accordance with Rule 137(2) EPC.

1. A battery system (100), comprising:
a battery housing (10) comprising a frame (14) and a cover plate (16) disposed on the frame (14) and having an accommodation chamber (11) defined by the frame (14) and the cover plate (16);
a plurality of battery cells (12) accommodated within the accommodation chamber (11);
wherein a tunnel (20) extends through the frame (14) from a first end of the accommodation chamber (11) to a second end of the accommodation chamber (11) such that a circumferential wall (22) of the tunnel (20) delimits the tunnel (20) from the accommodation chamber (11), wherein the tunnel (20) is adapted to receive a fastening element extending through the tunnel (20) to fasten the battery system (100) to a carrying structure of a vehicle;
wherein the frame (14) comprises, at an end of the tunnel (20), a sleeve (30) extending through an opening (18) in the cover plate (16) to an outer side of the cover plate (16), the sleeve (30) comprising an external thread (34), wherein the cover plate (16) abuts a shoulder (32) of the sleeve (30);
a nut (40) having an internal thread (42) and screwed onto the external thread (34) of the sleeve (30) such that an axial end face (44) of the nut (40) abuts the outer side of the cover plate (16),
**characterized in that** the nut (40) comprises a thread seal (43) at the internal thread (42) sealing the nut (40) to the sleeve (30) and an axial seal (46) at the axial end face (44) of the nut (40), the axial seal (46) encircling the sleeve (30) and sealing the nut (40) to the outer side of the cover plate (16).

2. The battery system (100) as claimed in claim 1, wherein the thread seal (43) comprises a sealing coating.

3. The battery system (100) as claimed in claim 1 or 2, wherein the internal thread (42) of the nut (40) is a fine thread.

4. The battery system (100) as claimed in any one of the preceding claims, wherein the axial seal (46) comprises a sprayed-on gasket.

5. The battery system (100) as claimed in any one of the preceding claims, wherein the axial seal (46) comprises a thermoplastic elastomer, TPE.

6. The battery system (100) as claimed in any one of the preceding claims, wherein the axial seal (46) comprises a rubber sealing which is vulcanized into a groove of the nut (40).

7. The battery system (100) as claimed in any one of the preceding claims, wherein the axial seal (46) is arranged at a radial distance (d₁) from the internal thread (42) of the nut (40).

8. The battery system (100) as claimed in any one of the preceding claims, wherein the nut (40) further comprises an upper seal (48) for sealing an upper end of the nut (40) to the sleeve (30).

9. The battery system (100) as claimed in claim 8, wherein the upper seal (48) comprises an inner circular lip (48a) abutting an outer surface of the sleeve (30).

10. The battery system (100) as claimed in any one of the preceding claims, wherein the cover plate (16) is any one of: a top cover plate, a bottom cover plate.

11. An electric vehicle comprising the battery system (100) as claimed in any one of the preceding claims.

12. The electric vehicle as claimed in claim 11, comprising a carrying structure and a fastening element extending through the tunnel (20) of the frame (14) of the battery system (100) so as to fasten the battery system (100) to the carrying structure.
